**Europäisches Patentamt**

**European Patent Office**

**Office européen des brevets**

(19)

(11) Veröffentlichungsnummer: **0 219 565**
**B1**

(12)

# EUROPÄISCHE PATENTSCHRIFT

(45) Veröffentlichungstag der Patentschrift:
**19.09.90**

(51) Int. Cl.⁵: **G01D 5/16, H01C 10/42**

(21) Anmeldenummer: **85113358.7**

(22) Anmeldetag: **22.10.85**

(54) Potentiometrisches Mess-System.

(43) Veröffentlichungstag der Anmeldung:
**29.04.87 Patentblatt 87/18**

(45) Bekanntmachung des Hinweises auf die Patenterteilung:
**19.09.90 Patentblatt 90/38**

(84) Benannte Vertragsstaaten:
**AT BE CH DE FR GB IT LI LU NL SE**

(56) Entgegenhaltungen:
DE-A- 3 204 344
DE-A- 3 406 366

(73) Patentinhaber: **HORST SIEDLE KG,**
**D-7743 Furtwangen(DE)**

(72) Erfinder: **Gass, Ernst, Dipl.-Ing.,**
**Walter-Flex-Strasse 36A, D-7000 Stuttgart 75(DE)**
Erfinder: **Hohmann, Hans, Dipl.-Ing. FH,**
**Haldenstrasse 30, D-7302 Ostfildern 4(DE)**
Erfinder: **Laue, Harald, Dipl.-Ing., im Göbel 4,**
**D-7300 Esslingen-Wäldenbronn(DE)**

(74) Vertreter: **Otte, Peter, Dipl.-Ing., Tiroler Strasse 15,**
**D-7250 Leonberg(DE)**

## Beschreibung

### Stand der Technik

Die Erfindung geht aus von einem potentiometrischen Meßsystem nach dem Oberbegriff des Anspruchs 1.

Bei bekannten Linearpotentiometern dieser Art, wie sie beispielsweise beschrieben sind in der DE-A-34 06 366 oder dem DE-GM 82 18 497.6 ist der mit Kollektor und Widerstandsbahn beschichtete Längsträger, üblicherweise ein flaches Kunststoffsubstrat, durch Schrauben innen im länglichen Profilgehäuse des Wegaufnehmers befestigt und ein von einer Schubstange getragener Schieber lagert selbst wieder einen Schleifer und bewegt diesen je nach Ausmaß der einwirkenden physikalischen Größe (Verschiebeweg) über die Widerstandsbahn. Der Schleifer kontaktiert gleichzeitig Widerstandsbahn und Kollektorbahn oder Rückführbahn, so daß sich an den elektrischen Anschlüssen des linearen Wegaufnehmers eine zur physikalischen Verschiebung proportionale elektrische Größe, hier nämlich die abgegriffene Spannung, ergibt.

Um von den auf dem Längssubstrat aufgetragenen Beschichtungen für Kollektor- und Widerstandsbahn die elektrische Verbindung zu den äußeren Steckeranschlüssen herzustellen, sind die Enden der jeweiligen Bahnen zunächst mit einem geeigneten, hochleitenden Material, etwa Leitsilber, beschichtet, wobei dann für jede Kontaktabnahme drei kleine Bohrungen an den Kontaktstellen vorgesehen werden können, durch welche Zuleitungsdrähte eingefädelt und dann mit den Leitsilberbeschichtungen verlötet werden. Anschließend werden diese mäanderförmig durch das Substrat hindurchgefädelten Anschlußlitzen zu inneren Kontaktanschlüssen geführt, die auch zu einem Steckanschluß gehören können und dort wieder angelötet - die endgültige Abnahme erfolgt dann durch einen geeigneten, weiterführenden Stecker.

In diesem Zusammenhang ist es aber auch schon bekannt (DE-A-34 06 366), im Gehäusebereich des Potentiometers einen Stecker so anzuordnen, daß man lediglich durch Einschieben des Trägerlängssubstrats vollständig in das Gehäuse Kontaktzungen dieses Steckers in elektrische Wirkverbindung mit den Leitsilber-Kontaktabgriffen bringt. Zu diesem Zweck kann der Stecker über federnde, gegeneinander isolierte Kontaktzungen verfügen, die beim Einschieben unter Druck zurückweichen und dann die jeweiligen Leitsilberteilschichten kontaktieren. Die vom Stecker abgegriffenen zugeführten oder abgeführten Spannungen oder Ströme können dann in geeigneter Weise weitergeführt werden.

Ferner ist es aus der gleichen DE-A-34 06 366 bekannt, das Trägerlängssubstrat für den linearen Wegaufnehmer so auszubilden, daß mindestens die Rückführung des auf der zum Steckanschluß abgewandten Seite befindlichen Widerstandspistenanschlusses durch Einlegen von hochleitfähigem Material und vorzugsweise gleichzeitigem Umspritzen, etwa auf der Längssubstrat-Rückseite erfolgt, speziell durch ein eingelagertes Kohlefaserroving oder Kohlefaserbündel.

Problematisch bei den bekannten Wegaufnehmern ist unter anderem, daß ein eigentlicher metallischer Schleiferträger auf dem Schieber aufgeschraubt werden muß, während das Trägerlängssubstrat, um für den Schleifer stets ein gleiches Niveau über seinen Verschiebeweg sicherzustellen, möglichst toleranzfrei durch Schraubbefestigungen im Gehäuse fixiert wird. Dabei sind am Gehäuse, üblicherweise ein Aluminiumprofil, ebenfalls zusätzliche Arbeitsgänge erforderlich. Probleme bei diesen bekannten Wegaufnehmern können sich ferner dadurch ergeben, daß die Kontaktierung der elektrischen Anschlüsse auf dem Widerstandsbahn und Kollektorbahn tragenden Trägerlängssubstrat lediglich durch Federdruck erfolgt, wobei auch Alterungseinflüsse, nämlich ein Erlahmen des Federdrucks, eine entscheidende Rolle spielen können. Ergeben sich unter diesen Umständen aber auch nur geringfügige Kontaktübergangswiderstände, dann werden die ermittelten Meßwerte unbrauchbar, da gerade bei Istwertgebern und ähnlichen Einsatzfällen mit höchsten Genauigkeiten gearbeitet werden muß.

Aus der DE-A-32 04 344 ist ferner ein langgestrecktes Potentiometer bekannt, mit einem mit einer Halterung drehfest verbundenen Widerstandsträger. Entlang des Widerstandsträgers ist durch Drehbewegung eines Gehäuses ein Abgreifer verschiebbar, der mit Gewindegängen in ein entsprechendes Innengewinde des Gehäuses eingreift. Ein solches langgestrecktes Potentiometer weist keine Berührungspunkte mit dem linearen Weggeber auf, wie er vorliegender Erfindung zugrundeliegt.

Der Erfindung liegt die Aufgabe zugrunde, bei dem die Gattung bestimmenden potentiometrischen Meßsystem dessen Aufbau, insbesondere im Bereich der Herstellung der elektrischen Verbindungen, entscheidend zu vereinfachen, bei gleichzeitiger Sicherstellung hoher Meßgenauigkeit und einwandfreier, auch alterungsbeständiger Betriebssicherheit.

### Vorteile der Erfindung

Die Erfindung löst diese Aufgabe mit den Merkmalen des Anspruchs 1 und hat den Vorteil, daß durch die unmittelbare, auch mit extrem hohem spezifischen Druck erfolgende Kontaktierung von Kontaktflächen auf dem Trägerlängssubstrat für die Kollektor- und die Widerstandsbahn die Bildung von Übergangs-Widerständen ausgeschlossen ist bei hoher alterungsbeständiger Kontaktgüte. Vorteilhaft ist ferner die Lagefixierung des Trägerlängssubstrats im Gehäuse durch reine Druckeinwirkung, so daß gegenseitige Beeinflussungen ausgeschlossen sind.

Von besonderem Vorteil ist hierbei ferner, daß durch die spezielle Art der Halterung der elektrischen Kontaktelemente im Steckerflansch erst nach vollendeter Montage, dann durch Einwirken von außen, eine vollkommen ermüdungsfreie Kontaktierung mit extrem hoher Druckkraft erreicht wird, und zwar ohne daß die elektrischen Kontaktelemente hierbei etwa über ihre Länge einwirkende Biegekräfte aufnehmen müßten.

Durch die in den Unteransprüchen aufgeführten Maßnahmen sind vorteilhafte Weiterbildungen und Verbesserungen des im Anspruch 1 angegebenen Meßsystems möglich. Besonders vorteilhaft ist die völlig toleranzfreie Lagerung der Trägerplatte für die Widerstands- und Kollektorbahn dadurch, daß diese einerseits beidseitig über die ganze Länge an Anschlags- oder Führungsflächen innerhalb des Aluminiumprofilgehäuses anliegt, andererseits an dieser Anlage durchlaufend mit vorgegebener Preßkraft unverrückbar angepreßt wird, wobei diese Preßkraft ebenfalls ermüdungsfrei gleichmäßig verteilt über die Länge der Trägerplatte auf diese ständig einwirkt, ohne daß hierzu Verschraubungen erforderlich sind. Schließlich ist vorteilhaft, daß der gleichzeitig Widerstands- und Kollektorbahn kontaktierende Doppelschleifer durch Anpunkten von Schleiferfingern auf ein Trägerblech hergestellt wird, welches seinerseits durch Umspritzen eines Kernteils des Schiebers mit einem geeigneten Kunststoff in diesen Kunststoff eingebettet und gleichzeitig unverrückbar mit dem Schieber verbunden wird, der durch eine Bohrung die Schubstange aufnimmt.

Besonders vorteilhaft ist ferner, daß die feste Kontaktierung im Bereich der Kontaktflächen des Trägerlängssubstrats durch von außen in ihrer Position durch das Betätigen von Schrauben verschiebbare Keilstücke im Steckerflansch bewirkt wird, die je nach Verschiebungsgrad zunehmend Teilbereiche der Kontaktelemente mit hohen Anpreßdrücken beidseitig des Trägerlängssubstrats an dieses anpressen, so daß hierdurch auch eine besonders gute mechanische Fixierung und Zuordnung des Steckerflansches zum Trägerlängssubstrat erreicht wird.

Ein Ausführungsbeispiel der Erfindung ist in der Zeichnung dargestellt und wird in der nachfolgenden Beschreibung näher erläutert. Es zeigen:

Fig. 1 eine Seitenansicht eines Ausführungsbeispiels eines linearen Wegaufnehmers, teilweise im Schnitt in Form einer Gesamtdarstellung und

Fig. 2 den linearen Wegaufnehner der Fig. 1 in einer Ansicht von vorn auf dem Steckerflansch und

Fig. 3 einen Schnitt längs der Linie III-III der Fig. 1;

Fig. 4 zeigt eine Draufsicht auf den längsverschieblichen Schieber mit Schleifer und Schleiferfinger;

Fig. 5 eine Draufsicht auf die Kollektorbahn und Widerstandsbahn tragende Trägerplatte und

Fig. 6 eine Seitendarstellung, die gleichzeitig das Profil der Trägerplatte zeigt;

Fig. 7 zeigt den Steckerflansch im Schnitt, wodurch auch dessen Zweiteiligkeit und die Lagerung der Kontaktelemente erkennbar wird und Fig. 8 eine Seitenansicht auf den Steckerflansch der Fig. 7;

Fig. 9 zeigt eine erste Ausführungsform eines (mittleren) Kontaktelements in Seitenansicht und

Fig. 10 das Kontaktelement der Fig. 9 in einer Ansicht von vorn und die

Fig. 11, 12, und 13 zeigen eine weite Ausführungsform eines Kontaktelements in einer Ansicht von oben, in einer Seitenansicht und in einer Ansicht von vorn.

Beschreibung der Ausführungsbeispiele

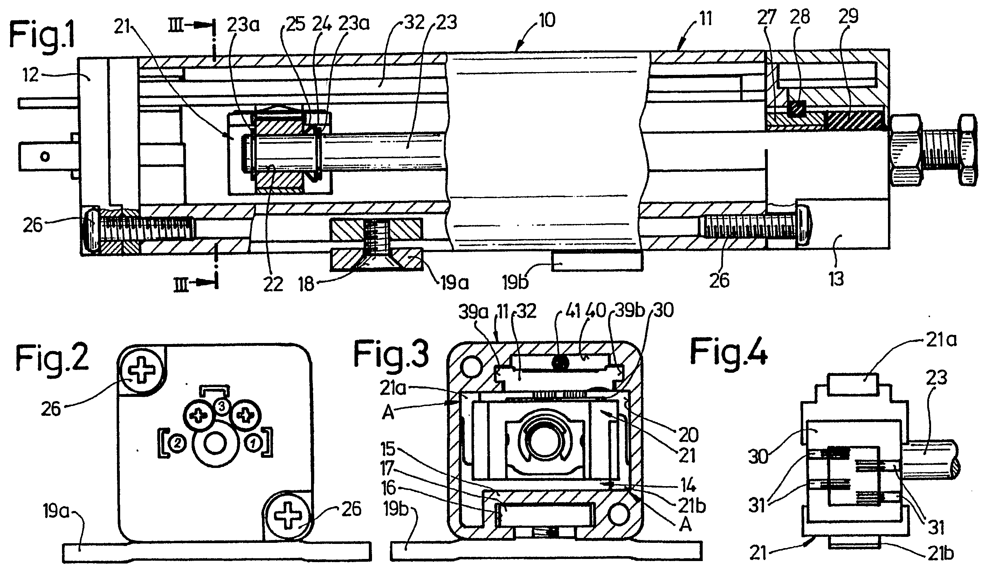

In Fig. 1 ist das von einem linearen Wegaufnehmer gebildete potentiometrische Meßsystem mit 10 bezeichnet; es besteht aus einem mit Bezug auf seine Längsflächen allseitig geschlossenem, vorzugsweise aus Aluminium bestehendem Hohlprofilgehäuse 11, dessen beide Längsenden einmal von einem Steckerflansch 12 sowie von einem Lagerflansch 13 abgeschlossen sind. Das Aluminiumhohlprofile des Gehäuses 11, welches beispielsweise ein Strangpreßprofil sein kann, läßt sich in seiner vielfältigen Profilgestaltung, die der Aufnahme und Lagerung der jeweiligen Einzelteile dient, am besten der Querschnittdarstellung der Fig. 3 entnehmen, wobei auch erkennbar ist, daß der unregelmäßig geformte innere Hohlraum 14 des Gehäuseprofils nach unten durch eine Zwischenwand 15 gegenüber einer verengten Schlitzführung 16 abgeschlossen ist, die sich über die Länge des Gehäuseprofils erstreckend Gleitstücke 17 aufnimmt, welche vorzugsweise über eine Halte- und Fixierschraube 18 (vergl. Fig. 1) als Mutter wirkend längsverschiebliche Füßchen 19a, 19b für das Wegaufnehmergehäuse lagern. Der Haupthohlraum 20 des Gehäuseprofils nimmt den in ihm gleitenden Schieber 21 auf, der in Fig. 4 in Draufsicht nochmals dargestellt ist. Der Schieber nimmt in einer Bohrung 22 (Fig. 1) die durchgeführte Schubstange 23 auf, die beidseitig über Sicherungsringe 23a sowie Unterlegscheibe 24 und Ausgleichsscheibe 25 mit dem Schieber 21 verbunden ist. Die Schubstange 23 ist im Bereich des Lagerflansches 13, der, wie auch der Steckerflansch 12 über Schrauben 26 mit dem Gehäuse verbunden sein kann, durchgeführt und vom Lagerflansch 13 über ein inneres Pendellager 27, von einem zwischengelegten O-Ring 28 von einem äußeren Gehäuse/Lagerflanschlager leicht verschwenk- bzw. verkippbar gehalten ist, gelagert. Mit 29 ist noch ein Filzabstreifer bezeichnet.

Aufbau und Funktion des Schiebers 21 sind so getroffen, daß ein inneres Kernstück, welches auch die Bohrung 22 für die Schubstange enthält und durch eine Graphitbeigabe angereichert sein kann, beidseitige Anlagestücke 21a, 21b bildet, mit denen der Schieber in den Eckbereichen, wie durch die Pfeile A in Fig. 3 gekennzeichnet, in der Zeichenebene links oben und rechts unten im Führungshohlraum 20 des Gehäuseprofils anliegt.

Um die obere metallische Lagerplatte 30, die dann ihrerseits wieder die einzelnen Schleiferfinger 31 des Schleifers trägt, an dem Kernstück des Schiebers zu befestigen, ist dieses mit einem Kunststoff aus einem anderen Material mindestens teilweise umspritzt und diese Umspritzung nimmt, in isolierendem Abstand zu dem Schieberkernstück, welches an den inneren Gehäusewänden gleitend anliegt, die metallische Lagerplatte 30 auf. Hierzu können von der Lagerplatte Abbiegungen ausgehen, was nicht dargestellt ist, die in das Kunststoffmaterial der Umspritzung eingebettet sind. Die Schleiferfinger sind dann an der metallischen Lagerplatte 30 des Schleifers beispielsweise durch Punktschweißen oder ähnliche Verbindungsarten befestigt.

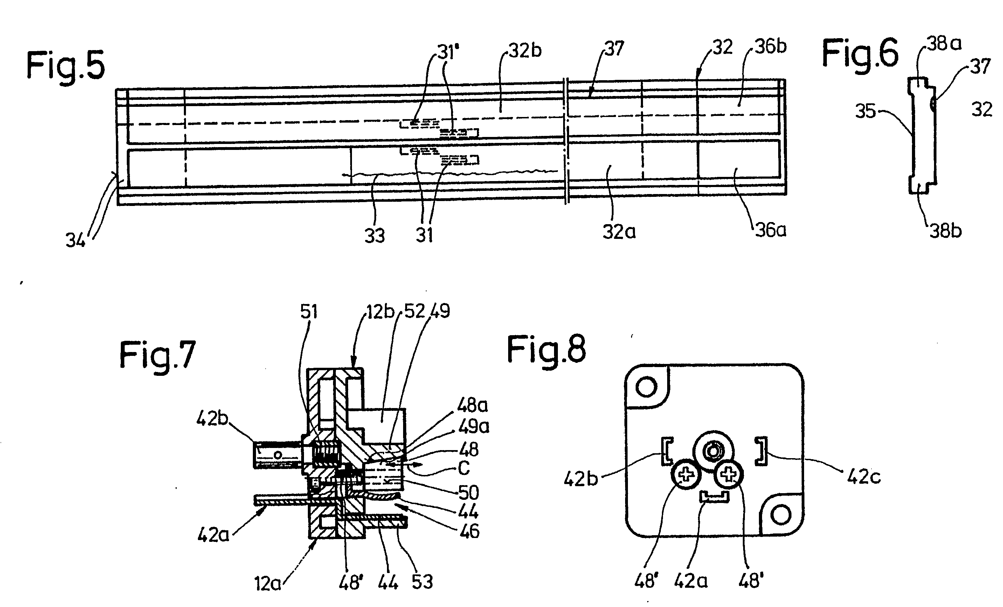

Wie die einzelnen Schleiferfinger von unten an den die Kollektorbahn und die Widerstandsbahn bildenden Belägen auf der Trägerlängsplatte anliegen, läßt sich am besten der Darstellung der Fig. 5 entnehmen, wo die Position der Schleiferfinger nochmals bei 31' angedeutet ist. Die Trägerlängsplatte oder das Trägerlängssubstrat ist mit 32 bezeichnet; man erkennt in der Ansicht der Fig. 5 die Widerstandsbahn 32a mit bei 33 angedeuteter Linearisierung, die Kollektorbahn 32b sowie bei 34 eine Umkontaktierung der Widerstandsbahn 32a mit Leitsilber auf die Rückseite der Trägerlängsplatte. Die Rückseite trägt eine gut leitende Beschichtung, beispielsweise nebeneinanderliegende Kohlefaserrovings 35, so daß dieser in der Darstellung der Fig. 5 linksseitige Endpunkt der Widerstandspiste über die Leitsilber-Umkontaktierung an dieser Stelle dann widerstandsfrei wieder nach vorn zu einer dort nicht dargestellten Leitsilber-Kontaktfläche auf der nicht erkennbaren Rückseite der Trägerlängsplatte geführt ist. Auf der in Fig. 5 sichtbaren Seite sind die Endkontaktflächen von Kollektorbahn 32b mit 36b und von Widerstandsbahn 32a mit 36a bezeichnet. Diese Endflächen bestehen bevorzugt aus auf die Beschichtungen aufgebrachtes Leitsilber.

Man erkennt ferner aus der Darstellung der Fig. 6, daß die im Grunde ähnliche Beschichtung, die die Kollektorbahn 32b bildet, etwa halbflächig, jedoch über die gesamte Länge der Bahn von einer sehr gut leitenden Schicht 37 unterlegt ist, die aus Kohlefaserrovings bestehen kann und daher dafür sorgt, daß das von der Widerstandsbahn 32a jeweils abgegriffene Potential verlustfrei, d.h. ohne jede Änderung von der Kollektorbahn 32b zum kollektorbahnseitigen Leitsilberauftrag 36b gebracht wird. Es läßt sich also feststellen, daß sich auf dem in der Zeichenebene der Fig. 5 rechten Endflächenbereich der Trägerlängsplatte drei (Leitsilber)-Kontaktflächen 36a, 36b und die rückseitige, auf der ganzen Kohlefaserfläche 35 aufgebrachte Leitsilberkontaktfläche (nicht dargestellt) befinden.

Zur im wesentlichen vollkommen toleranzfreier Positionierung und Lagerung sowie unverrückbaren Halterung der Trägerlängsplatte im Inneren des Profilgehäuses 11 weist die Trägerlängsplatte 32 seitliche, Abschulterungen bildende Ansätze 38a, 38b auf, mit denen sie beidseitig in entsprechende Längsausnehmungen oder Längsnuten 39a, 39b eines sich oberhalb des Haupthohlraums 20 anschließenden, die Trägerlängsplatte 32 aufnehmenden weiteren Hohlraum 40 eingreift. Da sich durch die spezielle Herstellung des Aluminiumgehäuseprofils im Strangpreßverfahren Abmessungen höchster Genauigkeit ergeben, erfolgt die Lagerung und vollständige Fixierung der Trägerlängsplatte 32 in ihrem Aufnahmehohlraum 40 dann so, daß zunächst ein Druckelement 41, welches bei dem dargestellten Ausführungsbeispiel ein längliches Vollgummi-Rundprofil ist, jedenfalls aus einem elastomeren Material besteht, in den Hohlraum 40 eingebracht und dann von beiden Seiten durch entsprechende Zugeinwirkung stark auseinandergezogen wird, wodurch sich dieses Profil erheblich verdünnt. Es ist dann problemlos möglich, unterhalb des Profils in die beidseitigen Führungsnuten 29a, 29b die Trägerlängsplatte 32 einzuschieben und läßt man anschließend die Enden des Druckelements 41 (Vollgummi-Rund-Längsprofil) los, dann zieht sich dieses aufgrund seiner ihm innewohnenden Elastizität energisch zusammen, verdickt sich erheblich und preßt mit einer außerordentlich starken Druckeinwirkung (stark auch deshalb, weil diese über die ganze Fläche erfolgt) die Trägerlängsplatte fest nach unten in ihre Führungsnuten zur Anlage. Die Trägerlängsplatte 32 ist auf diese Weise vollkommen unverrückbar in ihren Führungsnuten ohne jede weitere mechanische Einwirkung, etwa Verschrauben oder sonstige Justiernotwendigkeiten, gehalten und da das Druckelement 41 seine Druckkraft durchlaufend aufrechterhält und in keiner Weise ändert, ergibt sich auch eine hohe Betriebssicherheit und Beständigkeit gegenüber Alterungseinflüssen.

Hierdurch gelingt es, die Beschichtungen der Widerstandsbahn 32a und der Kollektorbahn 32b in einem einwandfrei vorgegebenen Festabstand zu den Schleiferfingern zu bringen, so daß diese ihre Vertikalposition (die Schleiferfinger sind nach oben gebogen und drücken von unten auf die zugeordneten Bahnen) nicht ändern und daher auch über den Verschiebeweg keine axialen Änderungen im Abgriffbereich erfolgen können mit daraus resultierenden Meßfehlern.

Ein weiteres wesentliches Merkmal vorliegender Erfindung besteht in der Übertragung der an den Kontaktflächen 36a, 36b und der rückseitigen Kontaktfläche für das andere Ende der Widerstandsbahn sich bildenden elektrischen Größen bzw. die Zuführung der erforderlichen Spannungen oder Ströme über diese Kontaktflächen zur Widerstandsbahn.

Hierzu wird so vorgegangen, daß der auf der Seite der Kontaktflächen der Trägerlängsplatte angeordnete Steckerflansch 12 elektrische und daher metallische Kontaktelemente von allgemein flacher Blechform, etwa aus Messing oder sonstigen geeigneten Legierungen, lagert, die einerseits mit Kontaktenden nach außen über den Steckerflansch hinausragen, wo beispielsweise ein anderer Stecker noch aufgesteckt werden kann, andererseits mit inneren Kontaktteilen aber in einen direkten Kontakt zu den (Leitsilber)Kontaktflächen der Trägerlängsplatte stehen. Um dies zu erreichen, wird wie folgt vorgegangen.

Mindestens eines der für die Bildung der drei Zuleitungen zu den beiden Enden der Widerstandsbahn und zur Kollektorbahn zuständigen Kontaktelemente ist so im Steckerflansch 12 gelagert, daß nach Ansetzen des Steckerflansches an das Gehäuse und dem Aufliegen geeigneter Kontaktzungen der Kontaktelemente auf den Leitsilber-Kontaktflächen der Trägerlängsplatte (es versteht sich, daß die Erfindung nicht auf die Anordnung von Leitsilber-Kontaktflächen beschränkt ist, sondern jede andere gut leitende Beschichtung verwendet werden kann) die Zungen durch eine Manipulation von außen so fest und kraftvoll gegen die zugeordnete Kontaktfläche der Trägerlängsplatte gepreßt werden können, so daß sich an dieser Stelle und dann durch den Gegendruck mindestens eines weiteren, auf der jeweils anderen Seite der Trägerlängsplatte angreifenden Kontaktelements auch für dieses eine insofern identische Anpreßdruckkraft ergibt.

Diese Manipulation von außen kann dadurch erfolgen, daß durch den Trägerflansch hindurch beispielsweise durch Betätigung einer von außen zugänglichen Schraube ein Keilstück bewegt wird, welches auf die mit der Kontaktfläche in Wirkverbindung stehende Kontaktzunge des jeweiligen Kontaktelementes dann zunehmend drückt und hierdurch, nämlich durch entsprechende Abstandsverringerung, die Kontaktpreßkraft erzeugt.

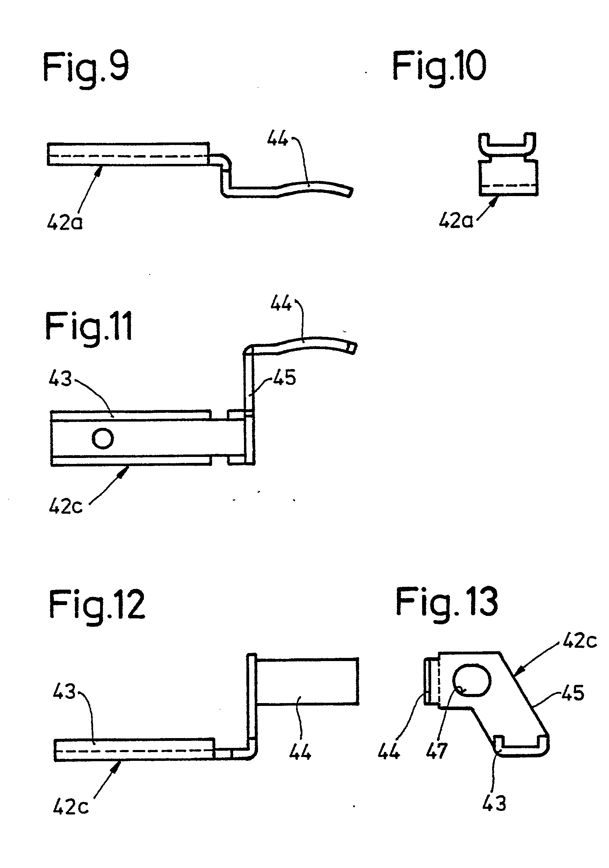

Im einzelnen wird hierzu so vorgegangen, daß bei dem dargestellten Ausführungsbeispiel (Fig. 7) die Kontaktelemente 42a, 42b und 42c zunächst von dem zweigeteilten Steckerflansch 12 mit den Flanschhälften 12a, 12b führend gehalten sind, wobei die Kontaktelemente 42a, 42b, 42c so zwischen und in die beiden Steckerflanschhälften 12a, 12b eingefügt sind, daß diese in Längsrichtung, also axial zum Wegaufnehmer, einen äußeren Steckkontakt 43 (Fig. 11, 12, 13), eine nach innen gerichtete und auf der zugehörigen Trägerlängsplatten-Kontaktfläche aufliegende Kontaktzunge 44 und ein hierzu jeweils vertikal, also in Querrichtung verlaufendes Zwischenteil 45 aufweisen, mit welchem das jeweilige Kontaktelement 42a, 42b, 42c zwischen den beiden Flanschhälften 12a, 12b, und zwar an deren Trennfläche verlaufend, angeordnet und gehalten ist.

Die Darstellung der Fig. 7 läßt genauer erkennen, was gemeint ist; der von den nach innen weisenden Kontaktzungen gebildete Zwischenraum, in welchen der die Leitsilber-Kontaktflächen tragende Endbereich der Trägerlängsplatte 32 eingeschoben wird, ist in Fig. 7 mit 46 bezeichnet und oben und unten gebildet durch Kontaktzungen 44 eines unteren (und, wie die Draufsicht der Fig. 8 zeigt, insofern auch mittleren) Kontaktelement 42a, welches die Rückseite der Trägerlängsplatte mit dem rückgeführten Widerstandsbahnanschluß kontaktiert, und zwei oberen Kontaktzungen 44, die zu den Kontaktelementen 42a und 42b gehören (in Fig. 5 ist die Kontaktzunge 44 des Kontaktelements 42b erkennbar).

Dabei sind die nach außen herausgeführten Steckkontakte 43 der Kontaktelemente 42a, 42b und 42c aus bestimmten bautechnischen Gründen, nämlich um eine sofortige Verbindung mit einem Normstecker (sogenannter Hydraulikstecker) zu ermöglichen, in einer allgemeinen Dreiecksform angeordnet, so daß die beiden oberen Kontaktelemente 42b und 42c in der Form zum Kontaktelement 42a unterschiedlich und untereinander spiegelbildlich gleich sind. Es ist daher in den Fig. 11, 12 und 13 lediglich eines dieser Kontaktelemente 42b, 42c dargestellt und man erkennt als wesentlichstes Merkmal, daß das Zwischenstück 45, jeweils von der Kontaktzunge 44 aus gesehen, schräg nach oben und außen läuft und darüber hinaus noch eine Bohrung 47 aufweist, durch welche jeweils eine zugeordnete Spannschraube 48' (Fig. 7) geführt ist. Die Kontaktzungen 44 sind jeweils in Richtung auf die von ihnen zu kontaktierende Leitsilber-Kontaktfläche ballig ausgebildet, können aber auch, wie in Fig. 7 bezüglich der Kontaktzunge 44 des unteren Kontaktelements 42a dargestellt, geradlinig verlaufen. Mindestens eine der Kontaktzungen weist jedoch diese ballige Form auf, wobei die Kontaktelemente insgesamt wieder aus einem Material mit geeigneten Federungseigenschaften bestehen, allerdings mit sehr hoher Federkonstanten, also einem sehr steifen Material, so daß erhebliche Kräfte für ein Abbiegen erforderlich sind.

Aus der Darstellung der Fig. 7 erkennt man weiter, daß bei dem dargestellten Ausführungsbeispiel mit Bezug auf die oberen Kontaktelemente 42b, 42c keilförmige Druckstücke 48 vorgesehen sind, die mit einer schrägen Keilfläche 48a auf einer entsprechend schräg axial vorspringenden Gleitfläche 49a eines axialen Flanschansatzes 49 gleiten. Da sich die Spannschraube 48' in einer Gewindeinnenbohrung 50 des Keilgleitstücks 48 einschrauben läßt, führt dieses, wenn man von außen die Spannschraube 48' weiter in das Keilstück 48 einschraubt, eine Axialbewegung längs des Doppelpfeils C aus, wodurch sich aber gleichzeitig auch eine nach unten gerichtete Bewegung mit extrem hohen Preßkräften ergibt, die bemüht ist, die jeweiligen Zungen 44 der Kontaktelemente 42b, 42c nach unten und auf die zugeordneten Leitsilber-Kontaktflächen zu pressen. Dieser Anpreßdruck kann so stark sein (erzielt durch die Untersetzung des Schraubgewindes), daß die Balligkeit der Kontaktzungen 44 weggedrückt wird, durch das Federmaterial aber erhalten bleibt, so daß auch bei späteren, eventuell auftretenden Änderungen der Verhältnisse immer ein hinreichender Kontaktpreßdruck der Kontaktzungen auf die zugeordneten Kontaktflächen sichergestellt ist, da die Kontaktzungen ihre ballige Form wiedergewinnen möchten.

Bei der Montage wird daher so vorgegangen, daß nach Einlegen der Kontaktelemente 42a, 42b, 42c zwischen die beiden Flanschhälften 12a, 12b diese zusammengefügt werden, wodurch die Kontaktelemente lediglich geführt gehalten sind, jedoch noch eine gewisse Beweglichkeit aufweisen; anschliessend werden die Keilgleitstücke 48 angesetzt und durch die Spannschrauben 48' von außen vorfixiert und der zusammengebaute Steckerflansch dann von außen auf das Gehäuseende aufgeschoben, wodurch gleichzeitig die Kontaktzungen 44 beidseitig an den zugeordneten Kontaktflächen der Trägerlängsplatte aufliegen. Man kann dann anschließend den Steckerflansch noch durch die Schrauben 26 am Gehäuse fixieren und zieht dann die Spannschrauben 48' an, wodurch die inneren Kontaktzungen 44 mit erheblicher Preßkraft auf die Kontaktflächen gedrückt werden und durch diese Klemmung zunächst eine mechanisch untrennbare Einheit zwischen der Trägerlängsplatte und dem Steckerflansch hergestellt wird und gleichzeitig die elektrischen Verbindungen ohne jede Übergangswiderstandsbildung sichergestellt werden. Durch Aufsetzen eines geeigneten Normsteckers von außen ist ein solcher linearer Wegaufnehmer dann fertig angeschlossen.

Es versteht sich, daß die Ausbildung des Steckerflansches einer Vielzahl von Modifikationen zugänglich ist; so kann an geeigneter Stelle eine Haltemutter 51 vor dem Zusammenfügen der Flanschhälften 12a, 12b eingelegt werden, durch welche der äußere Stecker auch festgeschraubt werden kann; ferner kann der Steckerflansch, nämlich dessen nach innen gerichtete Flanschhälfte 12b im Bereich der erhebliche Preßkräfte aufnehmenden Gleitflächen Verstärkungen aufweisen, nämlich noch zusätzliche Vertikalwandungen 52, die den nach oben gerichteten Druck des Ansatzes 49 beim Anziehen der Keilgleitstückes auffangen; desgleichen verfügt natürlich der Steckerflansch 12b auch im unteren Bereich noch über eine vorspringende Stützfläche 53, an welcher die Kontaktzunge 44 des unteren Kontaktelements 42a zur Anlage kommt. Schließlich erzielt man durch diese absolut rüttelfeste und extrem feste Einklemmung der Trägerlängsplatte 32 mit ihrem Endbereich im Steckerflansch 12 auch deren axiale Unverschiebbarkeit und zusätzliche Fixierung, denn die oberen Kontaktzungen 44 drücken nicht nur das eingefügte Endteil der Trägerlängsplatte gegen die untere Kontaktzunge 44 und halten diese, sondern auch zusätzlich noch in diesem Endbereich in die beidseitigen Führungsnuten 39a, 39b und wirken daher unterstützend zu der von dem Druckelement 41 aufgebrachten Druck- und Fixierkraft.

Es versteht sich, daß die Zweiteilung des Steckerflansches 12 nicht unbedingt notwendig ist, da, wenn man die Kontaktelemente vorab in eine Gießform eingibt, der Steckerflansch auch einstückig durch Umspritzen der Kontaktelemente herstellbar ist; wesentlich ist aber immer, daß entsprechende Keilgleitstücke 48 vorgesehen und durch Betätigung von außen zur Erzielung der erforderlichen Kontakt- und Fixierkraft auf die Trägerlängsplatte vorgesehen sind.

**Patentansprüche**

1. Potentiometrisches Meßsystem zur Umwandlung einer physikalischen in eine elektrische Größe, insbesondere linearer Wegaufnehmer, Präzissionsschiebepotentiometer u.dgl., mit einem Gehäuse (11), mit in diesem angeordneten, von einer Trägerlängsplatte (32) getragenen Widerstands- und Kollektorbahnen (32a, 32b) und einem von einem Schieber (21) getragenen, Widerstandsbahn mit Kollektorbahn elektrisch verbindenden Schleifer mit Schleiferfingern (31), wobei die in Form von elektrisch leitenden Konktaktflächen (36a, 36b) ausgebildeten elektrischen Anschlüsse von Widerstandsbahn und Kollektorbahn (32a, 32b) auf der Trägerlängsplatte (32) von elektrischen Kontaktelementen (42a, 42b, 42c) direkt kontaktiert sind, die in einem an das Gehäuse (11) angesetzten Steckerflansch (12) gehalten sind, dadurch gekennzeichnet, daß sowohl die Trägerlängsplatte (32) im Gehäuse (11) als auch die Kontaktverbindung zwischen deren Kontaktflächen (36a, 36b) und der (den) an diesen angreifenden, von mindestens einem Kontaktelement (42a, 42b, 42c) des Steckerflansches (12) gebildeten Kontaktzunge(n) (44) druckfixiert sind, wobei von außerhalb des Steckerflansches (12) einstellbare Keilgleitflächen zur Erzeugung der Kontaktpreßkraft auf die Kontaktzunge(n) (44) einwirken.

2. Potentiometrisches Meßsystem nach Anspruch 1, bei dem das Gehäuse (11) aus einem Strangpreßprofil hergestellt ist, dadurch gekennzeichnet, daß das Gehäuse (11) in einen den Schieber lagernden Haupthohlraum (20) und einen im Übergang nach oben sich anschließenden, die Trägerlängsplatte (32) aufnehmenden und lagernden Hohlraum (40) unterteilt ist und ferner ein unteres verengtes Schlitzprofil (16) aufweist, in welchem Befestigungsmuttern bildende Gleitstücke (17) verschiebbar und von Spannschrauben (18) gehaltene Gehäusefüßchen (19a, 19b) gelagert sind.

3. Potentiometrisches Meßsystem nach Anspruch 1 oder 2, dadurch gekennzeichnet, daß der Schieber (21) aus einem beidseitig Anlagegleitteile (21a, 21b) bildenden, mindestens teilweise mit einem Kunststoff umspritzten Kernblock mit Durchführungsbohrungen (22) für die Aufnahme einer Schubstange (23) besteht und eine die Schleiferfinger tragende metallische Trägerplatte (30) getrennt und isoliert vom Kernblock von der Umspritzung aufgenommen ist.

4. Potentiometrisches Meßsystem nach Anspruch 3, dadurch gekennzeichnet, daß die zusammen mit den Schleiferfingern (31) den Schleifer bildende metallische Trägerplatte (30) von der Umspritzung des Schieber-Kernblocks durch Einlagerung vorspringender Teile gehalten ist.

5. Potentiometrisches Meßsystem nach einem der Ansprüche 1 bis 4, dadurch gekennzeichnet, daß die Trägerlängsplatte (32) für die Widerstandsbahn (32a) und die Kollektorbahn (32b) mit beidseitigen Abschulterungen (38a, 38b) in Längsnuten (39a, 39b) des Gehäuses (11) gehalten und durch ein Drucklängselement (41) zwischen ihr und der oberen Gehäusewandung auf Anschlag gepreßt ist.

6. Potentiometrisches Meßsystem nach Anspruch 5, dadurch gekennzeichnet, daß das die Trägerlängsplatte (32) im Gehäuse (11) lage- und druckfixierende Druckelement (41) ein vor dem Einschieben der Trägerlängsplatte langgezogenes und anschließend durch Schrumpfung die Preßkraft erzeugendes Elastomer-Rundprofil ist.

7. Potentiometrisches Meßsystem nach einem der Ansprüche 1 bis 6, dadurch gekennzeichnet, daß die von den elektrischen Kontaktelementen (42a, 42b, 42c) des Steckerflansches (12) kontaktierten elektrischen Anschlüsse durch Leitsilber-Kontaktflächen (36a, 36b) auf Vorder- und Rückseite der Trägerlängsplatte (32) an deren einem, dem Steckerflansch (12) zugewandten Ende gebildet sind, wobei der abgewandte Widerstandsbahnanschluß durch Leitsilber-Umkontaktierung von der Vorder- zur Rückseite und Rückführung durch eine elektrisch leitende Beschichtung bis zu den Vorderseiten-Leitsilber-Kontaktflächen gebildet ist.

8. Potentiometrisches Meßsystem nach Anspruch 7, dadurch gekennzeichnet, daß in den Steckerflansch (12) drei Kontaktelemente (42a, 42b, 42c) eingelagert sind, wobei die Kontaktzunge (44) eines der Kontaktelemente eine auf der Trägerplattenrückseite angeordnete Leitsilber-Kontaktfläche und die von den beiden anderen Kontaktelementen (42b, 42c) ausgehenden Kontaktzungen (44) den Trägerlängsplatten-Endbereich von der anderen, Widerstandsbahn (32a) und Kollektorbahn (32b) tragenden Seite umfassen und diese beiden, auf den Leitsilber-Kontaktflächen (36a, 36b) der Widerstandsbahn und der Kollektorbahn direkt aufliegenden Kontaktzungen (44) über die Keilgleitflächen bildende Keilgleitstücke (48) angepreßt sind, während die auf der Trägerplattenrückseite kontaktierende Kontaktzunge (44) sich nach unten an einer vorspringenden Stützfläche (43) des Steckerflansches (12) abstützt.

9. Potentiometrisches Meßsystem nach Anspruch 8, dadurch gekennzeichnet, daß die Keilgleitstücke (48) durch von außen betätigbare Spannschrauben (48') so in schräge Gleitführungen der zugewandten Flanschseite gepreßt und gezogen werden, daß sich hierdurch eine Verengung zwischen den die Trägerlängsplatte beidseitig umfassenden Kontaktzungen (44) der Kontaktelemente (42a, 42b, 42c) ergibt.

10. Potentiometrisches Meßsystem nach Anspruch 8 oder 9, dadurch gekennzeichnet, daß der Steckerflansch (12) zweiteilig ausgebildet ist mit einer ersten äußeren Flanschhälfte (12a) und einer zweiten inneren Flanschhälfte (12b), wobei jedes Kontaktelement (42a, 42b, 42c) in Querrichtung verlaufende Zwischenstücke (45) aufweist, die zwischen die Trennfläche der beiden Flanschteile (12a, 12b) eingefügt sind.

11. Potentiometrisches Meßsystem nach Anspruch 10, dadurch gekennzeichnet, daß jedes Kontaktelement einen nach außen durch die äußere Flanschhälfte (12a) geführten Steckkontakt (43), das längs der Trennstelle in Querrichtung verlaufende Zwischenstück (45) und die nach innen aus der inneren Flanschhälfte (12b) in Richtung auf die Trägerlängsplatte vorspringende Kontaktzunge (44) aufweist, wobei das Zwischenstück (45) eine Bohrung (47) aufweist, durch welche die Spannschraube (48') zur Betätigung des zugeordneten Keilgleitstücks (48) geführt ist.

12. Potentiometrisches Meßsystem nach einem der Ansprüche 8 bis 11, dadurch gekennzeichnet, daß die innere Flanschhälfte (12b) verschiedene Axialansätze (49, 53) sowie Stützwände (42) und Stützflächen aufweist, an welche die unter Preßdruck stehenden Kontaktzungen (44) bzw. die zugewandten Flächen der Keilgleitstücke (48) bei Ausübung der Preßkraft auf das eingespannte Endstück der Trägerlängsplatte (32) zur Anlage gelangen.

## Claims

1. Potentiometric measuring system for converting a physical value into an electrical value, in particular of linear displacement transducers, precision sliding potentiometers and the like, having a housing (11) with resistor track and collector tracks (32a, 32b) mounted therein and carried by a longitudinal carrier plate (32, and with a slider with slider fingers (31), mounted on a slide (21) for electrically connecting the resistor track to the collector track, wherein the electric terminals of the resistor track and collector track (32a, 32b), having the form of electrically conductive contact faces (36a, 36b) are directly contacted on the longitudinal carrier plate (32) by electrical contact elements (42a, 42b, 42c), which are held in a plug flange (12) mounted on the housing (11), characterised in that both the longitudinal carrier plate (32) in the housing (11) and the contact connection between their contact faces (36a, 36b) and the contact tongue(s) (44) engaged thereon and formed by at least one contact element (42a, 42b, 42c) of the plug flange (12), are pressure fixed, and wedge-shaped sliding faces for generating the contact pressing force and adjustable from outside the plug flange (12) act on the contact tongue(s) (44).

2. Potentiometric measuring system according to claim 1, wherein the housing (11) consists of an extrusion moulded profile, characterised in that the housing (11) is divided into a main cavity (20) housing the slide, and a cavity (40) which adjoins in the transition at the top for housing and supporting the longitudinal carrier plate (32) and in that the housing furthermore has a slot profile (16) which tapers downwards, in which sliding members (17) forming fixing nuts are displaceably mounted and in which housing feet (19a, 19b) held by fixing screws (18) are mounted.

3. Potentiometric measuring system according to claim 1 or 2, characterised in that the slide (21) consists of a core block, around at least part of which a plastics material has been moulded, forming bearing sliding parts (21a, 21b) on both sides and having through-bores (22) for receiving a push rod (23), and a metal carrier plate (30) for carrying the slider fingers is received separately and insulated from the core block by the surrounding injection moulded plastics material.

4. Potentiometric measuring system according to claim 3, characterised in that the metal carrier plate (30) forming the slider together with the slider fingers (31) is held by the injection moulding around the slide core block by intercalation of projecting parts.

5. Potentiometric measuring system according to one of claims 1 to 4, characterised in that the longitudinal carrier plate (32) for the resistor track (32a) and the collector track (32b) is held by shoulders (38a, 38b) on both sides in longitudinal grooves (39a, 39b) of the housing (11) and is pressed against a stop by a longitudinal pressure element (41) between said carrier plate (32) and the upper housing wall.

6. Potentiometric measuring system according to claim 5, characterised in that the pressure element (41) which fixes the position and pressure of the longitudinal carrier plate (32) in the housing (11) is, before insertion of the longitudinal carrier plate, a round elastomer profile which is stretched and then generates the pressing force by contraction.

7. Potentiometric measuring system according to one of claims 1 to 6, characterised in that the electric terminals contacted by the electrical contact elements (42a, 42b, 42c) of the plug flange (12) are formed by conducting silver contact faces (36a, 36b) on the front and rear side of the longitudinal carrier plate (32) on its end facing the plug flange (12), the remote resistor track terminal being formed by conducting silver reverse contacting from the front to the rear side and feedback by an electrically conductive coating to the front side conducting silver contact faces.

8. Potentiometric measuring system according to claim 7, characterised in that three contact elements (42a, 42b, 42c) are mounted in the plug flange (12), in which case the contact tongue (44) of one of the contact elements surrounds a conducting silver contact face mounted on the carrier plate rear and the contact tongues (44) emanating from the two other contact elements (42b, 42c) surround the longitudinal carrier plate end region from the other side carrying the resistor track (32a) and the collector track (32b) and these two contact tongues (44) bearing directly on the conducting silver contact faces (36a, 36b) of the resistor track and of the collector track are pressed via the wedge-shaped sliding members (48) forming the wedge-shaped sliding faces, whereas the contact tongue (44) contacting the carrier plate rear bears downwards against a projecting support face (43) of the plug flange (12).

9. Potentiometric measuring system according to claim 8, characterised in that the wedge-shaped sliding members (48) are so pressed and drawn into oblique sliding guides of the associated flange side by fixing screws (48') actuatable from outside, that a narrowing is thereby produced between the contact tongues (44) of the contact elements (42a, 42b, 42c) surrounding the longitudinal carrier plate on both sides.

10. Potentiometric measuring system according to claim 8 or 9, characterised in that the plug flange (12) is formed in two parts with a first outer flange half (12a) and a second inner flange half (12b), each contact element (42a, 42b, 42c) having intermediate members (45) extending in a transverse direction, which are inserted between the separating face of the two flange parts (12a, 12b).

11. Potentiometric measuring system according to claim 10, characterised in that each contact element comprises a plug contact (43) guided out through the outer flange half (12a), the intermediate member (45) extending in the transverse direction, and the contact tongue (44) projecting inwards from the inner flange half (12b) towards the longitudinal carrier plate, in which case the intermediate member (45) has a bore (47), through which the fixing screw (48') for actuating the associated wedge-shaped sliding member (48) is guided.

12. Potentiometric measuring system according to one of claims 8 to 11, characterised in that the inner flange half (12b) has various axial projections (49, 53) and support walls (42) and support faces, against which the contact tongues (44) under pressure or the associated faces of the wedge-shaped sliding members (48) come to bear when pressure is exerted on the clamped end piece of the longitudinal carrier plate (32).

## Revendications

1. Système potentiomètrique de mesure pour convertir une grandeur physique en une grandeur électrique, notamment capteur de déplacement linéaire, potentiomètre coulissant de précision, etc... avec un boîtier (11), avec dans ce boîtier des pistes résistantes et collectrices (32a, 32b) supportées par une plaque longitudinale de support (32) et un curseur supporté par un coulisseau (21) avec des doigts (31) reliant électriquement la piste résistante à la piste collectrice, les raccordements, réalisés en forme de surfaces de contact (36a, 36b) électriquement conductrices, de la piste résistante et de la piste conductrice (32a, 32b) sur la plaque longitudinale de support (32) étant en contact direct avec des éléments de contact électrique (42a, 42b, 42c), qui sont maintenus dans un flasque de connecteur (12) placé contre le boîtier (11), système caractérisé en ce que la plaque longitudinale de support (32) dans le boîtier (11) aussi bien que la liaison de contact entre ses surfaces de contact (36a, 36b) et la languette ou les languettes de contact (44) venant en prise sur ces surfaces et constituées par au moins un élément de contact (42a, 42b, 42c) du flasque de connecteur (12), sont fixées par pression, des surfaces de glissement en coin, réglables de l'extérieur du flasque de connecteur (12) et assurant la pression de contact sur la ou les languettes de contact (44).

2. Système potentiomètrique de mesure selon la revendication 1, dans lequel le boîtier (11) est réalisé à partir d'un profilé extrudé, système caractérisé en ce que le boîtier (11) est subdivisé en un espace creux principal (20) dans lequel est logé le coulisseau, et s'y raccordant selon une transition vers le haut, un espace creux (40) dans lequel est logée et montée la plaque longitudinale de support (32) et le boîtier (11) comportant en outre, un profil inférieur rétréci et fendu (16) sur lequel sont montés, de façon à pouvoir coulisser, des pièces de glissement (17) constituant des écrous de fixation et des supports de boîtier (19a, 19b) maintenus par des vis de serrage (18).

3. Système potentiomètrique de mesure selon la revendication 1 ou la revendication 2, caractérisé en ce que le coulisseau (21) est constitué par un bloc central formant des deux côtés des parties de guidage et d'appui (21a, 21b), recouvert au moins partiellement par injection avec une matière plastique, et comportant des perçages traversants (22) pour recevoir une tige de poussée (23), et une plaque métallique de support (30), portant les doigts du curseur, séparée et isolée du bloc central, est maintenue par le revêtement en matière plastique.

4. Système potentiomètrique de mesure selon la revendication 3, caractérisé en ce que la plaque métallique de support (30), constituant le coulisseau conjointement avec les doigts du curseur, est maintenue par le revêtement en matière plastique du bloc central du coulisseau grâce à l'inclusion de parties en saillie.

5. Système potentiomètrique de mesure selon une des revendications 1 à 4, caractérisé en ce que la plaque longitudinale de support (32) pour la piste résistante (32a) et la piste collectrice (32b) est maintenue, par des épaulements (38a, 38b) des deux côtés dans des gorges longitudinales (39a, 39b) du boîtier (11), et est appliquée en butée par un élément longitudinal de pression (41) placé entre elle et la paroi supérieure du boîtier.

6. Système potentiomètrique de mesure selon la revendication 5, caractérisé en ce que l'élément de pression (41), fixant en position et en pression la plaque longitudinale de support (32) dans le boîtier (11), est un profilé rond en élastomère étiré longitudinalement avant l'introduction de la plaque longitudinale de support et exerçant ensuite l'effort de pression par rétraction.

7. Système potentiomètrique de mesure selon une des revendications 1 à 6, caractérisé en ce que les raccordements électriques en contact avec les éléments de contact électrique (42a, 42b, 42c) du flasque de connecteur (12) sont constitués par des surfaces de contact (36a, 36b) en argent conducteur, sur la face avant et la face arrière de la plaque longitudinale de support (32), à l'extrémité de cette plaque placée en regard du flasque de connecteur (12), tandis que le raccordement opposé de la piste résistante est constitué par un contact en argent conducteur allant de la face avant à la face arrière, le retour jusqu'aux surfaces de contact en argent conducteur des faces avant s'effectuant par un revêtement électriquement conducteur.

8. Système potentiomètrique de mesure selon la revendication 7, caractérisé en ce que trois éléments de contact (42a, 42b, 42c) sont insérés dans le flasque de connecteur (12), la languette de contact (44) d'un des éléments de contact entourant une surface de contact en argent conducteur disposée sur la face arrière de la plaque longitudinale de support, et les languettes de contact (44) partant des deux autres éléments de contact (42b, 42c) entourant la zone terminale de l'autre face de la plaque longitudinale de support, portant la piste résistante (32a) et la piste collectrice (32b), et ces deux languettes de contact (44), s'appliquant directement sur les surfaces de contact en argent conducteur (36a, 36b) de la piste résistante et de la piste collectrice, étant pressées sur ces surfaces par les pièces de glissement en coin (48) formant les surfaces de glissement en coin, tandis que la languette de contact (44) s'appliquant sur la face arrière de la plaque longitudinale de support, prend appui vers le bas contre une surface d'appui en saillie (43) du flasque de connecteur (12).

9. Système potentiomètrique de mesure selon la revendication 8, caractérisé en ce que, grâce à des vis de serrage (48') susceptibles d'être actionnées de l'extérieur, les pièces de glissement en coin (48) sont pressées et tirées sur des guidages obliques de la face du flasque placée en regard, de sorte qu'il en résulte un rapprochement entre les languettes de contact (44), entourant des deux côtés la plaque longitudinale de support, des éléments de contact (42a, 42b, 42c).

10. Système de mesure potentiomètrique selon la revendication 8 ou la revendication 9, caractérisé en ce que le flasque de connecteur (12) est réalisé en deux parties, avec une première moitié externe (12a) et une seconde moitié interne (12b), chaque élément de contact (42a, 42b, 42c) comportant des parties intermédiaires (45) s'étendant en direction transversale, qui sont insérées entre les surfaces de séparation des deux parties (12a, 12b) du flasque.

11. Système potentiomètrique de mesure selon la revendication 10, caractérisé en ce que chaque élément de contact comporte un contact d'enfichage (43) passant à l'extérieur à travers la moitié externe (12a) du flasque et qui comporte le long du plan de séparation, une partie intermédiaire (45) s'étendant en direction transversale ainsi que la languette de contact (44) faisant saillie vers l'intérieur à partir de la moitié interne (12b) du flasque et en direction de la plaque longitudinale de support, la partie intermédiaire (45) comportant un perçage (47) à travers lequel passe la vis de serrage (48') prévue pour actionner la pièce de glissement en coin (48) correspondante.

12. Système potentiomètrique de mesure selon une des revendications 8 à 11, caractérisé en ce que la moitié interne (12b) du flasque comporte différents appendices axiaux (49, 53) ainsi que des parois d'appui (42) et des surfaces d'appui, contre lesquels ou lesquelles viennent en butée les languettes de contact (44) ou bien les surfaces des pièces de glissement en coin (48) placées en regard, lorsque l'effort de pressage s'exerce sur la partie terminale de la plaque longitudinale de support (32).

Fig.1

Fig.2

Fig.3

Fig.4

EP 0 219 565 B1

**Fig.5**

**Fig.6**

**Fig.7**

**Fig.8**

EP 0 219 565 B1

Fig.9

Fig.10

Fig.11

Fig.12

Fig.13